# EUROPÄISCHE PATENTSCHRIFT

(11) **EP 2 915 659 B1**
(45) Veröffentlichungstag und Bekanntmachung des Hinweises auf die Patenterteilung: **29.04.2020**
(21) Anmeldenummer: 14000798.0
(22) Anmeldetag: 06.03.2014
(51) Int. Cl.: B29C 70/74, B29C 70/86, B29C 70/30, B29D 99/00, B29C 35/08, B29K 105/06

(54) **Faserverbundbauteil mit strahlvernetztem Füllkörper**
Fibre composite component with filling body crosslinked by irradiation
Élément en fibres composites doté d'un corps de remplissage réticulé par irradiation

(43) Veröffentlichungstag der Anmeldung: 09.09.2015
(73) Patentinhaber: Airbus Defence and Space GmbH, 85521 Ottobrunn (DE); Airbus Helicopters Deutschland GmbH, 86607 Donauwörth (DE)
(72) Erfinder: Breu, Christoph, 83101 Rohrdorf (DE); Beier, Uwe, 85635 Höhenkirchen (DE); Metzner, Christian, 85579 Neubiberg (DE)
(74) Vertreter: LKGLOBAL Lorenz & Kopf PartG mbB Patentanwälte

(56) Entgegenhaltungen:
- EP-A2- 2 610 166
- GB-A- 2 246 320
- US-A1- 2003 044 570
- US-A1- 2007 208 447

## Beschreibung

### GEBIET DER ERFINDUNG

Die Erfindung betrifft ein Verfahren zum Herstellen eines Faserverbundbauteils.

### HINTERGRUND DER ERFINDUNG

Beispielsweise bei der Anbindung von winkligen Profilen an flächige Strukturen zur Herstellung von Faserverbundbauteilen aus textilen Halbzeugen oder Prepreg-Materialien (d.h. vorimprägnierten Materialien) können Hohlräume entstehen, die aus strukturmechanischen Gründen mit Fasermaterial ausgefüllt werden sollten. Dies ist in der Regel mit großem Aufwand durch passende textile oder vorimprägnierte Füllstrukturen realisierbar, da diese Füllkörper keine bevorzugte Faserrichtung aufweisen sollten.

Beispielsweise ist es möglich, wenn textile Verstärkungselemente auf flächigen Halbzeugen aufgebracht werden, die entstehenden Hohlräume mit geflochtenen Füllstrukturen aus Kohlenstofffaserrovings aufzufüllen. Für jede Hohlraumgeometrie muss dabei normalerweise ein genau konfektioniertes Produkt hergestellt werden. Normalerweise ist eine exakte Passform nicht gewährleistet und somit ist das Einstellen eines spezifischen Fasergehalts schwierig. Außerdem ist diese Lösung bei der Fertigung des Füllkörpers und dessen Einbringen in der Regel hohen Toleranzen unterworfen, was direkte Auswirkungen auf die Bauteilqualität haben kann.

Ein weiterer Ansatz ist das Herstellen von Füllstrukturen aus Prepreg-Materialien. Diese Lösung erlaubt das Herstellen von Füllkörpern mit hoher Qualität und einem hohen Freiheitsgrad in der Faserarchitektur, ist aber in der Regel äußerst aufwendig.

Wie beispielsweise in der DE 10 2006 031432 A2 beschrieben, können Füllkörper auch aus thermoplastischen Materialien hergestellt werden, was aber in Kombination mit Matrixsystemen auf Epoxidbasis zu Auswaschungen, Quellen oder auch zu Rissbildung im Füllkörper oder Faserverbund führen kann.

Die EP 2610166 A2 betrifft einen Verbundwerkstoff-Zwickelfüller aus abgeschnittenem Material von Fasergeweben, die in Fragmente von 2 mm bis 10 mm Länge geschnitten und in einzelne Garn- oder Vorgarnelemente getrennt sind, die zu einem quasi-homogenen Rohmaterial gemischt sind für einen halbfertigen Zwickelfüller.

### ZUSAMMENFASSUNG DER ERFINDUNG

Es ist Aufgabe der Erfindung, ein Faserverbundbauteil bereitzustellen, das verbesserte mechanische Eigenschaften aufweist und das leicht und preisgünstig herzustellen ist.

Diese Aufgabe wird durch den Gegenstand des unabhängigen Anspruchs gelöst. Weitere Ausführungsformen der Erfindung ergeben sich aus den abhängigen Ansprüchen und aus der folgenden Beschreibung.

Die Erfindung betrifft ein Verfahren zum Herstellen eines Faserverbundbauteils. Dabei ist zu verstehen, dass ein Faserverbundbauteil in der Regel zwei Hauptkomponenten aufweist, eine Matrix aus Kunststoffmaterial und verstärkende Fasern, die in die Matrix eingebracht sind. Diese Fasern können beispielsweise Kohlenstofffasern oder Glasfasern sein.

Gemäß der Erfindung umfasst das Verfahren die folgenden Schritte: Herstellen eines Füllkörpers für einen Vorformling des Faserverbundbauteils aus einem Kunststoffmaterial, wobei der Vorformling ein Textilmaterial umfasst; Strahlvernetzen des Kunststoffmaterials des Füllkörpers, so dass sich Kunststoffmoleküle des Kunststoffmaterials miteinander verbinden; Einfügen des Füllkörpers in den Vorformling des Faserverbundbauteils; und Verbinden des Füllkörpers mit dem Vorformling zum Bilden des Faserverbundbauteils.

Dabei ist es möglich, dass der Füllkörper vor oder nach dem Vernetzten in den Vorformling eingefügt wird und/oder dass der Füllkörper vor oder nach dem Vernetzen ausgeformt wird (Es ist denkbar, den Füllkörper nach dem Bestrahlen mechanisch zu bearbeiten).

Beispielsweise kann ein von seiner Außengeometrie an einen Hohlraum in dem Vorformling angepasster Füllkörper vernetzt werden, so dass sich seine Werkstoffeigenschaften verbessern und anschließend in den Vorformling eingefügt werden, um das Faserverbundbauteil zu bilden.

Gemäß der Erfindung wird das Kunststoffmaterial durch Bestrahlen des Füllkörpers mit einer Strahlung vernetzt. Beispielsweise kann der der Füllkörper mit Elektronen-, Röntgen- und/oder Gammastrahlung bestrahlt werden. Diese Art der Bestrahlung von Kunststoffmaterial mit in der Regel hochenergetischer Strahlung (normalerweise Elektronen oder elektromagnetische Strahlen) führt dazu, dass sich Molekülketten in dem Kunststoffmaterial (in der Regel ein Polymer) derart miteinander vernetzen, wie sie es durch rein chemische Prozesse nicht machen würden. Auf diese Weise können Werkstoffeigenschaften des Kunststoffmaterials des Füllkörpers verändert werden und insbesondere der Füllkörper an seine Funktion im Faserverbundbauteil angepasst werden.

Insgesamt können durch das Bestrahlen Füllkörper mit einer höheren chemischen und/oder auch thermischen Stabilität erzeugt werden. Durch Anpassen der Strahlungsintensität können diese Eigenschaften auch zusätzlich an die Anforderungen des Faserverbundbauteils angepasst werden.

Es ist zu verstehen, dass unter Strahlvernetzen auch lediglich ein teilweises Vernetzen des Kunststoffmaterials verstanden werden kann. Allerdings ist es auch möglich, dass das Kunststoffmaterial vollständig vernetzt wird.

Beispielsweise können die mechanischen Eigenschaften des Füllkörpers verändert werden und beispielsweise seine Elastizität gesenkt und/oder an die Elastizität des gesamten Faserverbundbauteils angepasst werden.

Auch ist es möglich, die chemischen Eigenschaften des Füllkörpers zu verändern, so dass beispielsweise das Material des Füllkörpers seine thermoplastischen Eigenschaften verliert und/oder nicht mehr oder nur vermindert mit dem Matrixmaterial des Faserverbundbauteils reagiert.

Gemäß einer Ausführungsform der Erfindung wird der Füllkörper aus einem Kautschukmaterial hergestellt, wie etwa EPDM-Kautschukmaterial. Das Kautschukmaterial kann vor dem Einfügen in den Vorformling teilweise oder ganz vulkanisiert und anschließend strahlvernetzt werden. Ein Füllkörper aus Kautschukmaterial kann sich durch seine hohen Dämpfungseigenschaften auszeichnen und kann das Impaktverhalten des Faserverbundbauteils positiv beeinflussen.

Gemäß einer Ausführungsform der Erfindung werden der Vorformling und der Füllkörper in Harz eingegossen, um das Faserverbundbauteil zu bilden. Auf diese Weise können der Füllkörper und der Vorformling miteinander verbunden werden. Das Harz bzw. Harzmaterial kann auch eventuell verbleibende Zwischenräume zwischen dem Füllkörper und dem Vorformling auffüllen. Das Harzmaterial kann auch dazu verwendet werden, das Matrixmaterial eines (rein) textilen Vorformlings zu bilden. Das Harzmaterial kann beispielsweise ein Duromer (wie z.B. Epoxidharz oder Phenolharz) oder ein Thermoplast (wie z.B. Polyamid) sein.

Gemäß einer Ausführungsform der Erfindung wird der Füllkörper aus einem Thermoplast hergestellt, wie etwa Polyetherimid. Der Thermoplast kann anschließend mittels Strahlvernetzen (beispielsweise Elektronenstrahlen) zumindest teilweise oder vollständig (d.h. so stark wie möglich) vernetzt werden. Durch einen unterschiedlichen Grad der Vernetzung können die Eigenschaften des Füllkörpers beeinflusst und an die spezifischen Anforderungen angepasst werden. Anschließend kann der bestrahlte Füllkörper in den Vorformling eingefügt werden.

Gemäß einer Ausführungsform der Erfindung werden beim Herstellen des Füllkörpers Verstärkungsfasern, beispielsweise Kohlenstofffasern, in den Füllkörper eingebracht. Auf diese Weise kann die Druckfestigkeit des Füllkörpers erhöht werden. Weiter kann mit den Fasern die Steifigkeit des Füllkörpers besser mit der Steifigkeit der restlichen Komponenten des Faserverbundbauteils abgestimmt werden.

Die Verstärkungsfasern können Kurzfasern und/oder Langfasern umfassen. Bei Thermoplast als Material des Füllkörpers können die Fasern in die Schmelze des Thermoplasts beim Herstellen des Füllkörpers eingebracht werden. Bei Kautschukmaterialen können die Fasern mechanisch eingebracht werden (beispielsweise durch Kneten).

Gemäß einer Ausführungsform der Erfindung wird der Füllkörper mit beispielsweise Elektronen-, Röntgen- und/oder Gammastrahlung bestrahlt. Strahlvernetzen ist mit verschiedenen Arten von Strahlung möglich. Thermoplastmaterialien können beispielsweise mittels Elektronenstrahlen vernetzt werden.

Gemäß einer Ausführungsform der Erfindung weist der Füllkörper eine längliche Form mit einem mehreckigen Querschnitt auf. Beispielsweise kann der Hohlraum zwischen einem flächigen Formteil und zwei (rechtwinklig) abgewinkelten Formteilen gebildet sein, die beispielsweise zusammen eine T-förmige Verstärkung bilden können. Der entstehende Hohlraum kann auf diese Weise länglich mit einem dreieckigen zelt- bzw. zwickelförmigen Querschnitt ausgebildet sein. Entsprechend kann auch der Füllkörper zelt- bzw. zwickelförmig sein.

Gemäß einer Ausführungsform der Erfindung wird der Füllkörper stranggepresst. Insbesondere thermoplastische Füllkörper mit konstantem Querschnitt können sehr präzise und kostengünstig mittels Extrusion hergestellt werden. Auch Füllkörper aus Kautschukmaterial können extrudiert werden.

Gemäß einer Ausführungsform der Erfindung wird der Füllkörper spritzgegossen. Füllkörper mit variablem Querschnitt, insbesondere aus thermoplastischem Material, können mittels Spritzguss hergestellt werden. Neben Spritzgießen können Füllkörper aus Kautschukmaterial auch mittels kalandrierten Platten umgeformt werden.

Gemäß einer Ausführungsform der Erfindung wird der Vorformling aus mehreren Formteilen zusammengefügt. Beispielsweise kann ein Formteil eben sein, auf das eines oder mehrere Formteile zur Verstärkung aufgebracht werden, beispielsweise zwei rechtwinklige Formteile, die eine T-förmige Anordnung bilden.

Gemäß einer Ausführungsform der Erfindung wird der Füllkörper beim Zusammenfügen der mehreren Formteile zwischen die Formteile eingefügt. Bevor die beiden oben genannten rechtwinkligen Formteile auf dem ebenen Formteil angeordnet werden, kann der Füllkörper beispielsweise an der entsprechende Stelle auf dem ebenen Formteil abgelegt werden.

Gemäß einer Ausführungsform der Erfindung weist der Vorformling wenigstens ein vorimprägniertes Formteil bzw. Prepreg-Formteil auf. Beispielsweise kann der Füllkörper in ein noch nicht ausgehärtetes Faserverbundbauteil eingesetzt werden. Unter einem Prepreg-Formteil kann dabei ein Halbzeug verstanden werden, das Fasern und eine Matrix aus nicht-ausgehärtetem Kunststoff (beispielsweise ein Duroplast) umfasst. Die vorimprägnierten Formteile können vor dem Zusammenfügen des Vorformlings bereits in eine bestimmte Form gebracht worden sein (beispielsweise rechtwinklig bzw. L-förmig).

Das Faserverbundbauteil kann nach dem Zusammenfügen der Prepreg-Formteile und des Füllkörpers sowie nach dem Eingießen in Harzmaterial (das das gleiche Material wie das Matrixmaterial der Prepreg-Formteile sein kann) beispielsweise durch Erhitzen gehärtet werden.

Gemäß der Erfindung weist der Vorformling wenigstens ein (insbesondere unimprägniertes) textiles Formteil auf. Unter einem textilen Formteil kann dabei ein Formteil verstanden werden, das lediglich aus Fasern aufgebaut ist, beispielsweise ein Vlies oder eine relativ starre dreidimensionale Struktur, die aus Fasern aufgebaut ist.

In diesem Fall können das oder die textilen Formteile zusammen mit dem Füllkörper in Harzmaterial getränkt und optional anschließend gehärtet werden. Auf diese Weise wird der Füllkörper in das Harzmaterial eingegossen und die Matrix des Faserverbundbauteils aus dem Harzmaterial gebildet. Geeignete Harz- bzw. Matrixmaterialien können Duroplaste und Thermoplaste sein.

Ein weiterer Aspekt der Offenbarung betrifft ein Faserverbundbauteil, so wie es etwa mit dem obenstehend und untenstehend beschriebenen Verfahren hergestellt werden kann.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt eine Querschnittsansicht eines Faserverbundbauteils, das mit dem Verfahren gemäß der Erfindung hergestellt ist.
Fig. 2 zeigt ein Flussdiagramm für ein Verfahren zum Herstellen eines Faserverbundbauteils gemäß einer Ausführungsform der Erfindung.

Grundsätzlich sind identische oder ähnliche Teile mit den gleichen Bezugszeichen versehen.

### DETAILLIERTE BESCHREIBUNG VON AUSFÜHRUNGSBEISPIELEN

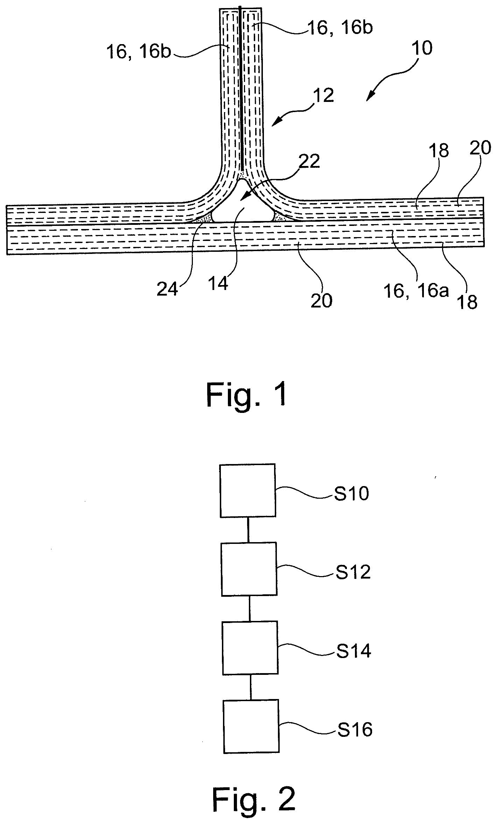

Fig. 1 zeigt einen Querschnitt durch ein Faserverbundbauteil 10, das aus einem Vorformling 12 und einem strahlvernetzten Füllkörper 14 aufgebaut ist.

Der Vorformling 12 umfasst mehrere Formteile 16, wie in der Fig. 1 gezeigt, ein im Wesentlichen ebenes Formteil 16a und zwei rechtwinklig gebogene bzw. L-förmige Formteile 16b. Die Formteile 16 können entweder aus textilen Formteilen gebildet sein, die nach dem Zusammenbau des Vorformlings 12 und/oder dem Einfügen des Füllkörpers 14 mit einem Matrixmaterial getränkt und eventuell gehärtet wurden. Andererseits können die Formteile 16 aus Prepreg-Formteilen gebildet sein, die nach dem Zusammenbau des Vorformlings 12 und/oder dem Einfügen des Füllkörpers 14 gehärtet wurden.

In beiden Fällen weisen die Bestandteile des Faserverbundbauteils, die aus dem Vorformling gebildet sind, ein Textilmaterial 18 bzw. Fasern 18 auf, das bzw. die in ein ausgehärtetes Matrixmaterial 20 eingebettet sind.

Zwischen den Formteilen 16 ist ein Hohlraum 22 gebildet, der vollständig durch den Füllkörper 14 und ein Harzmaterial 24 ausgefüllt ist, das identisch mit dem Matrixmaterial 20 sein kann. Der Füllkörper 14 kann beispielsweise in den Vorformling 12 aus textilen und/oder Prepreg-Formteilen 16 eingefügt worden sein und anschließend in das Harzmaterial 24 eingegossen worden sein.

Die mechanischen und/oder chemischen Eigenschaften des Füllkörpers 14 wurden durch chemisches Vernetzen oder Strahlvernetzen verändert, um den Füllkörper besser an die Anforderungen im Verbundbauteil anzupassen. Diese veränderten Eigenschaften sind messbar und können zumindest teilweise nur durch ein Strahlvernetzungsverfahren erreicht werden. Dadurch ist ein vernetzter Füllkörper 14 eindeutig von einem unbehandelten Füllkörper aus dem gleichen unbehandelten Material unterscheidbar.

Der Hohlraum 22 und/oder der Füllkörper 14 können (in Richtung senkrecht zur Ebene des Querschnitts) länglich sein und/oder einen gleichmäßigen Querschnitt aufweisen. Beispielsweise können der Hohlraum und/oder der Füllkörper einen mehreckigen Querschnitt und insbesondere einen zwickelförmigen Querschnitt aufweisen.

Die Fig. 2 zeigt ein Verfahren, mit dem das Faserverbundbauteil 10 aus der Fig. 1 hergestellt werden kann.

Im Schritt S10 wird der Füllkörper 14 aus einem Kunststoffmaterial hergestellt. Beispielsweise kann der Füllkörper 14 aus einem Thermoplast stranggepresst oder spritzgegossen werden. Auch kann der Füllkörper aus einem Kautschukmaterial stranggepresst oder spritzgegossen oder aus kalandrierten Platten geformt oder geschnitten werden. Es ist auch denkbar, dass der Füllkörper 14 nach einem Aushärten nachbearbeitet wird, beispielsweise durch zusätzliche mechanische Bearbeitung nach der Extrusion.

Zusätzlich können in den Füllkörper 14 Verstärkungsfasern eingearbeitet werden. Beispielsweise können die Fasern in eine Schmelze aus dem Kunststoffmaterial eingebracht werden oder in das noch weiche Kunststoffmaterial eingeknetet werden.

Im Schritt S12 wird das Kunststoffmaterial des Füllkörpers 14 durch Bestrahlen strahlvernetzt so dass sich Kunststoffmoleküle des Kunststoffmaterials miteinander verbinden. Im Allgemeinen kann der Füllkörper 14 mit Beta-, Röntgen- und/oder Gammastrahlung bestrahlt werden. Durch sogenanntes Elektronenstrahlen können beispielsweise Polymere wie Polyethylen, Polypropylen, usw. in ihren chemischen und mechanischen Eigenschaften verändert werden.

Im Schritt S14 wird der Vorformling 12 aus den Formteilen 16 zusammengefügt und gleichzeitig der Füllkörper 14 in den Vorformling 12 eingefügt. Beispielsweise kann der Vorformling 12 aus Prepreg-Formteilen 16 und/oder rein textilen Formteilen 16 zusammengefügt werden, wobei der Füllkörper 14 zwischen den Formteilen 16 aufgenommen wird.

Im Schritt S16 wird der Füllkörper 14 mit dem Vorformling 12 verbunden. Umfasst der Vorformling 12 beispielsweise Prepreg-Formteile 16, kann der Füllkörper 14 in ein Harzmaterial 24 eingegossen werden und anschließend das Matrixmaterial der Prepreg-Formteile 16 und/oder das Harzmaterial 24 ausgehärtet werden. Umfasst der Vorformling 12 textile Formteile 16, kann das Harzmaterial 24 auch als Matrixmaterial 20 für die textilen Formteile 16 verwendet werden, die auch mit dem Harzmaterial 24 getränkt werden können. Auch in diesem Fall kann das Harzmaterial 24 (beispielsweise durch Wärme) ausgehärtet werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Herstellen eines Faserverbundbauteils (10), das Verfahren umfassend:
Herstellen eines Füllkörpers (14) für einen Vorformling (12) des Faserverbundbauteils (10) aus einem Kunststoffmaterial, wobei der Vorformling ein Textilmaterial (18) umfasst;
Vernetzen des Kunststoffmaterials des Füllkörpers (14) durch Bestrahlen des Füllkörpers (14) mit einer Strahlung, so dass sich Kunststoffmoleküle des Kunststoffmaterials miteinander verbinden;
Einfügen des Füllkörpers (14) in den Vorformling (12) des Faserverbundbauteils (10); und
Verbinden des Füllkörpers (14) mit dem Vorformling (12) zum Bilden des Faserverbundbauteils (10).

2. Verfahren nach Anspruch 1,
wobei der Füllkörper (14) mit Elektronen-, Röntgen- und/oder Gammastrahlung bestrahlt wird.

3. Verfahren nach einem der vorhergehenden Ansprüche,
wobei der Vorformling (12) und der Füllkörper (14) in Harzmaterial (24) eingegossen werden, um das Faserverbundbauteil (10) zu bilden.

4. Verfahren nach einem der vorhergehenden Ansprüche,
wobei der Füllkörper (14) aus einem Thermoplast hergestellt ist; oder
wobei der Füllkörper (14) aus einem Kautschukmaterial hergestellt ist.

5. Verfahren nach einem der vorhergehenden Ansprüche,
wobei beim Herstellen des Füllkörpers (14) Verstärkungsfasern in den Füllkörper eingebracht werden.

6. Verfahren nach einem der vorhergehenden Ansprüche,
wobei der Füllkörper (14) eine längliche Form mit einem mehreckigen Querschnitt aufweist.

7. Verfahren nach einem der vorhergehenden Ansprüche,
wobei der Füllkörper (14) stranggepresst wird; oder
wobei der Füllkörper (14) spritzgegossen wird.

8. Verfahren nach einem der vorhergehenden Ansprüche,
wobei der Vorformling (12) aus mehreren Formteilen (16) zusammengefügt wird.

9. Verfahren nach Anspruch 8,
wobei der Füllkörper (14) beim Zusammenfügen der mehreren Formteile (16) zwischen die Formteile (16) eingefügt wird.

10. Verfahren nach einem der vorhergehenden Ansprüche,
wobei der Vorformling (12) wenigstens ein vorimprägniertes Formteil (16) aufweist.

11. Verfahren nach einem der vorhergehenden Ansprüche,
wobei der Vorformling (12) wenigstens ein unimprägniertes textiles Formteil (16) aufweist.

## Claims

1. Method for producing a fibre composite component (10), said method comprising:
producing a filling body (14) for a preform (12) of the fibre composite component (10) from a plastics material, wherein the preform comprises a textile material (18);
cross-linking the plastics material of the filling body (14) by irradiating the filling body (14) with radiation such that the plastics material molecules of the plastics material are connected to one another;
inserting the filling body (14) into the preform (12) of the fibre composite component (10); and connecting the filling body (14) to the preform (12) so as to form the fibre composite component (10).

2. Method according to Claim 1,
wherein the filling body (14) is irradiated with electron radiation, x-ray radiation, and/or gamma radiation.

3. Method according to one of the preceding claims,
wherein the preform (12) and the filling body (14) are cast in a resin material (24) so as to form the fibre composite component (10).

4. Method according to one of the preceding claims,
wherein the filling body (14) is produced from a thermoplastic material; or wherein the filling body (14) is produced from a rubber material.

5. Method according to one of the preceding claims,
wherein reinforcement fibres are incorporated into the filling body in the production of the filling body (14).

6. Method according to one of the preceding claims,
wherein the filling body (14) has an elongate shape having a polygonal cross section.

7. Method according to one of the preceding claims,
wherein the filling body (14) is extruded; or wherein the filling body (14) is injection-moulded.

8. Method according to one of the preceding claims,
wherein the preform (12) is assembled from a plurality of mouldings (16).

9. Method according to Claim 8,
wherein the filling body (14) is inserted between the mouldings (16) when assembling the plurality of mouldings (16).

10. Method according to one of the preceding claims,
wherein the preform (12) has at least one preimpregnated moulding (16).

11. Method according to one of the preceding claims,
wherein the preform (12) has at least one non-impregnated textile moulding (16).

## Revendications

1. Procédé de fabrication d'un composant composite fibreux (10), le procédé comprenant :
la fabrication d'un corps de remplissage (14) pour une préforme (12) du composant composite fibreux (10) en un matériau en matière plastique, la préforme comprenant un matériau textile (18) ;
la réticulation du matériau en matière plastique du corps de remplissage (14) par exposition du corps de remplissage (14) à un rayonnement, de telle sorte que des molécules de matière plastique du matériau en matière plastique se relient les unes avec les autres ;
l'insertion du corps de remplissage (14) dans la préforme (12) du composant composite fibreux (10) ; et
la liaison du corps de remplissage (14) avec la préforme (12) pour former le composant composite fibreux (10).

2. Procédé selon la revendication 1, dans lequel le corps de remplissage (14) est exposé à un faisceau d'électrons, un rayon X et/ou un rayon gamma.

3. Procédé selon l'une quelconque des revendications précédentes, dans lequel la préforme (12) et le corps de remplissage (14) sont moulés dans un matériau de résine (24) afin de former le composant composite fibreux (10).

4. Procédé selon l'une quelconque des revendications précédentes, dans lequel le corps de remplissage (14) est fabriqué en un thermoplastique ; ou dans lequel le corps de remplissage (14) est fabriqué en un matériau de caoutchouc.

5. Procédé selon l'une quelconque des revendications précédentes, dans lequel des fibres de renforcement sont introduites dans le corps de remplissage lors de la fabrication du corps de remplissage (14).

6. Procédé selon l'une quelconque des revendications précédentes, dans lequel le corps de remplissage (14) présente une forme longitudinale ayant une section transversale polygonale.

7. Procédé selon l'une quelconque des revendications précédentes, dans lequel le corps de remplissage (14) est extrudé ; ou dans lequel le corps de remplissage (14) est moulé par injection.

8. Procédé selon l'une quelconque des revendications précédentes, dans lequel la préforme (12) est assemblée à partir de plusieurs pièces moulées (16).

9. Procédé selon la revendication 8, dans lequel le corps de remplissage (14) est inséré entre les pièces moulées (16) lors de l'assemblage des pièces moulées (16) .

10. Procédé selon l'une quelconque des revendications précédentes, dans lequel la préforme (12) comprend au moins une pièce moulée pré-imprégnée (16).

11. Procédé selon l'une quelconque des revendications précédentes, dans lequel la préforme (12) comprend au moins une pièce moulée textile non imprégnée (16).
